# EUROPEAN PATENT SPECIFICATION

(11) **EP 0 312 361 B1**
(45) Date of publication and mention of the grant of the patent: **14.06.1995**
(21) Application number: 88309610.9
(22) Date of filing: 13.10.1988
(51) Int. Cl.: G09B 29/10

(54) **Map display system for a navigator system**
Kartenanzeigesystem für ein Navigationssystem
Système d'affichage des cartes pour un système de navigation

(30) Priority: 16.10.1987 JP 261097/87
(43) Date of publication of application: 19.04.1989
(73) Proprietor: SONY CORPORATION, Tokyo 141 (JP)
(72) Inventor: Morinaga, Eiichiro, Shinagawa-ku Tokyo (JP); Yoshida, Tadao, Shinagawa-ku Tokyo (JP); Hori, Katsuya, Shinagawa-ku Tokyo (JP); Okabe, Masanobu, Shinagawa-ku Tokyo (JP)
(74) Representative: Ayers, Martyn Lewis Stanley

(56) References cited:
- EP-A- 0 169 339
- GB-A- 2 165 427

## Description

The present invention relates to an electronic map display system suitable for use in a navigator system or the like for displaying the present position of an operator on a road map.

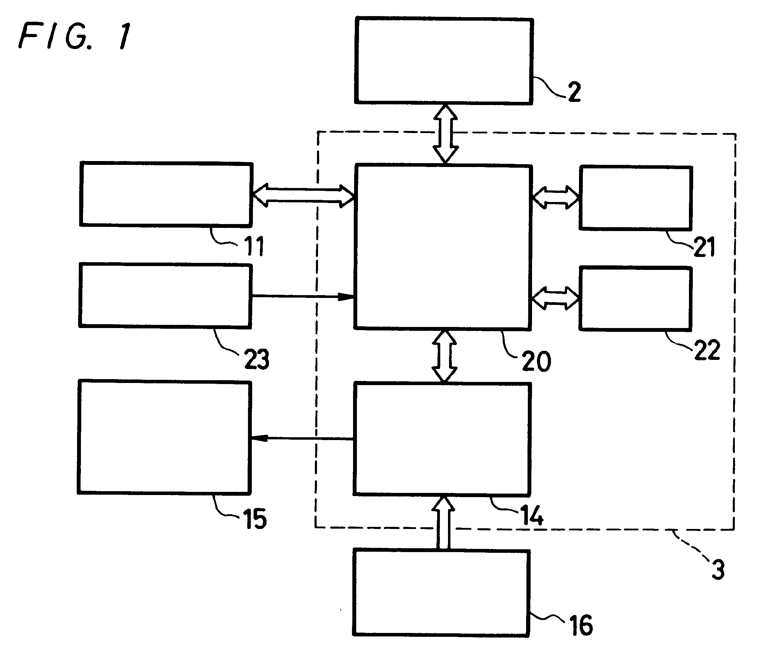

Conventionally, a vehicle navigator for displaying the present position of a vehicle on an electronic map is constructed as shown in figure 1.

In figure 1, a signal processing unit 3 comprises a computer 20, memories such as a ROM 21 and a RAM 22, and so on connected to the computer 20, a display controller 14 for controlling a display 15 such as a liquid crystal display (LCD), a cathode ray tube (CRT) or the like.

The computer 20 is provided with data from a map data store 2, eg, a CD-ROM, an azimuth detector 11 which comprises a directional sensor for detecting, eg, X and Y components of the terrestrial magnetism to recognise the direction of motion of the vehicle concerned and for analog-to-digital converting the output from the direction sensor to generate digital signals indicative of the detected X and Y components in accordance with the direction of the vehicle, a distance sensor 23 for generating predetermined pulses corresponding to unit distances of motion and so on. The computer 20 processes the data provided thereto on the basis of instructions inputted from an operating keyboard 16 to display a map information for a particular area, the present position and so on on the display 15.

Some navigator systems are provided with operating keys for enlarging or reducing the scale of the electronic map displayed on the display 15. Generally, such scale reduction (scale down) of maps is carried out, for example, by either of the following methods.
(i) the navigator system is previously provided in the map data memory 2 with maps to several different scales such that a map, to a required scale is searched for and read out in accordance with the instruction inputted from the operating keyboard 16; and
(ii) the computer 20 itself calculates map data to reduce the scale of the map as required.

The method (i) gives rise to the problem that the displayed area of a map is reduced stepwise in the reduction process so that the location or region displayed immediately before the reduction is executed is lost.

The method (ii), different from the method (i), can reduce the displayed area of a map in a desired scale, however, it also presents the possibility of losing the location displayed immediately before the map scale reducing operation. Further, the method (ii) requires that the computer 20 is capable of high speed data processing and that map data be described in a vector fashion.

EP-A-0,169,339 discloses a navigation system in which a continuous small scale map and plural discrete large scale maps are stored. During display of the small scale map visual indication is given of the location of areas for which a large scale map is available.

Accordingly, it is an object of the present invention to provide an electronic map display system in which when the presently displayed map has been reduced in scale and then displayed, an operator can immediately recognise the position of the displayed area on the reduced map.

According to the present invention, there is provided a map display system for a navigator system comprising:
map data storing means for storing data representative of a substantially continuous map,
read out means for reading out data representative of a part of said substantially continuous map,
display means for displaying said part of said map
operating means for bringing about a reduction in scale of a map displayed on said display means by means of a map reduction instruction;
reduced map data forming means connected to said display means for forming a reduced map data to display a reduced map on said display means in response to said map reduction instruction from said operating means; and
area data forming means connected to said display means for forming map area data corresponding to the map area which was displayed on said display means before the operation of said operating means, wherein when said reduction instruction is delivered from said operating means, output data from said area data forming means is supplied to said display means to thereby visually indicate, on the reduced map, the location of the part of the map, which was displayed by said display means before the map is reduced; characterised in that:
said area data forming means is further adapted to erase said indication if said operation means is operated when no further reduction of said map is possible.

The above and other features and advantages of the present invention will become apparent from the following detailed description of the preferred embodiment taken in conjunction with the accompanying drawings, throughout which like reference numerals designate like elements and parts. In the drawings:-
Figure 1 is a block diagram systematically showing an arrangement of a previously proposed navigator system;
Figure 2 is a block diagram systematically showing an embodiment of an electronic map display system according to the present invention;
Figures 3A and 3B are diagrams respectively showing a front view of the electronic map display system of the embodiment shown in Figure 2;
Figure 4 is a flowchart used for explaining the operation of the electronic map display system of Figure 2; and
Figure 5 is a diagram used for explaining how to calculate an area of a reduced map.

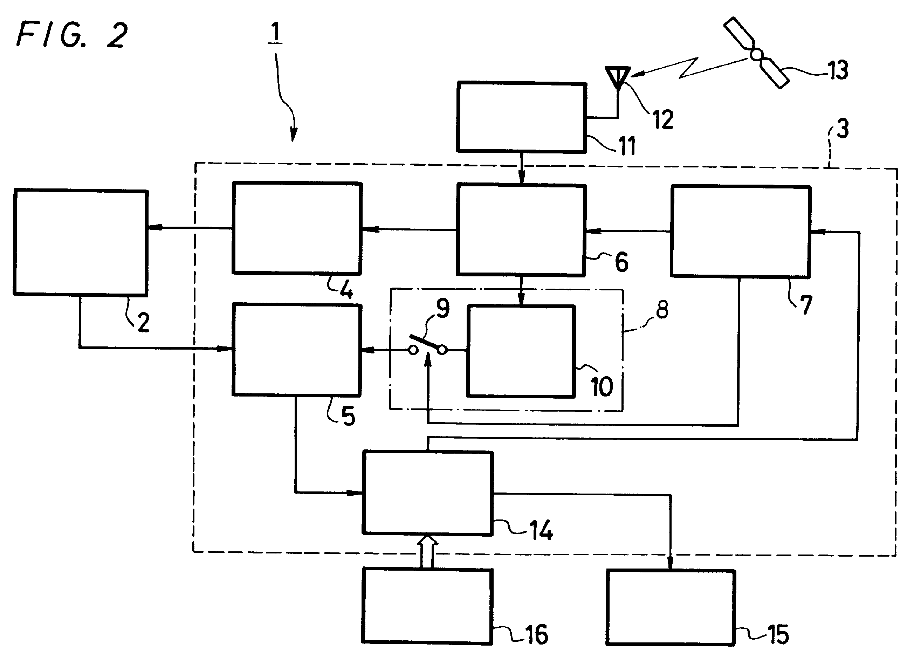

An embodiment of the present invention will hereinafter be described with reference to Figures 2 to 5.

In Figure 2, an electronic map display system 1 comprises a map data store 2 including a CD-ROM or the like, a signal processing unit 3, a position detector 11 such as a global positioning system (GPS) receiver or the like, a display 15 such as a CRT or the like and an operating keyboard 16 such as a ten-key board or the like.

The signal processing unit 3 includes hardware such as a computer 20, a ROM 21, RAM 22 and so on (refer to figure 1), although not shown in the drawing. A calculating circuit 6, which corresponds to the computer 20 and effects calculations for enlargement or reduction of map data, is supplied with a signal indicative of a key input from a key operation processing circuit 7 and a position detecting signal from the position detector 11. The position detector 11 is constituted of a GPS receiver which receives radio waves from an artificial satellite 13 through an antenna 12 to recognise the position of a vehicle equipped with the electronic map system of a present embodiment. However, it can be replaced by a gyro-based system or one which detects its position on the basis of terrestrial magnetism. The output from the calculating circuit 6 is supplied to a frame display controller 8 comprising a frame drawing element 10 and a switch 9 as well as to a verifying circuit 4 for indicating a predetermined map file number to the map data store 2 in accordance with a calculation result obtained by the calculating circuit 6. The verifying section 4 searches for a map with a predetermined map file number from maps drawn to different scales and stored hierarchically in the CD-ROM of the map data store 2 and transfers the searched map to an image store 5 arranged in the signal processing unit 3. The above-mentioned map data store 2 may not only be a CD-ROM but also a digital audio tape recorder (DAT) or an IC card. It can also access a remote data base of map data, eg, via telephone cable or the like and store downloaded map data in a read/write memory or the like. The image store 5 may be constituted of a frame memory provided for exclusively storing image data. Alternatively, the memory element arranged in the calculating circuit (computer 6) such as RAM or the like may be used in common as the image store 5. The image store 5 is supplied through a switch 9 with the output from the frame display controller 8. The switch 9 in on-off controlled by a control signal from the key operation processing circuit 7. The image store 5 outputs a signal indicative of outputting an image stored therein which is supplied to a display controller 14. The display controller 14 is also supplied with an operating signal from the operating keyboard 16. The output from the display controller 14 is supplied to the display 15 and the key operation processing circuit 7. The display 15 may be constituted by a CRT, a LCD or the like.

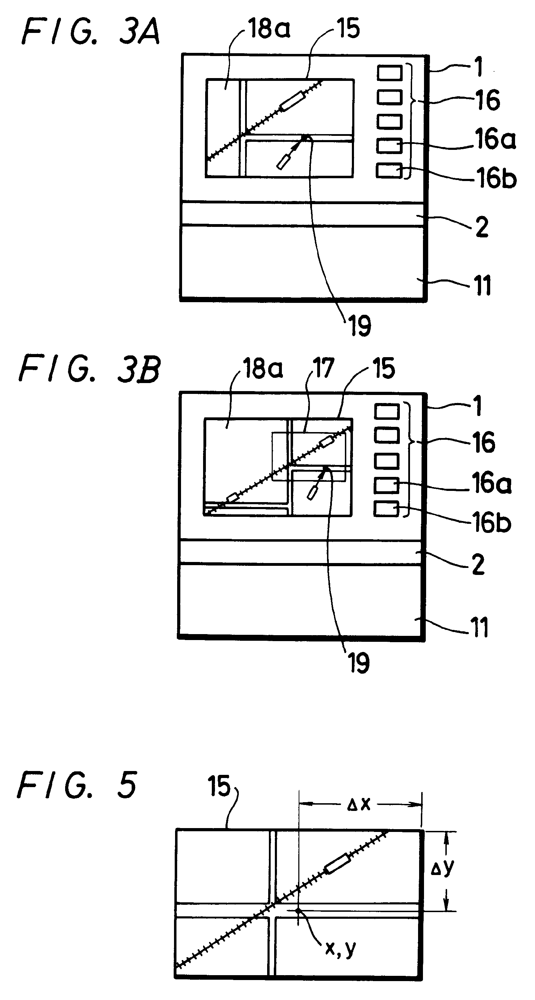

Next, the operations effected by the system constructed as described above will be explained with reference to figures 3-5. Figures 3A and 3B respectively illustrate a front view of the electronic map system of the present embodiment showing an arrangement of the display 15, the operating keyboard 16 and so on. The operating keyboard 16 is positioned on one side of the display 15. A group of keys constituting the operating keyboard 16 includes an up-key for enlarging a map in scale and a down-key for reducing a map in scale. Disposed under the display 15 is a driving mechanism for driving the CD-ROM used as the map data store 2. Also, the position detector II, ie, GPS receiver is arranged under the CD-ROM driving mechanism.

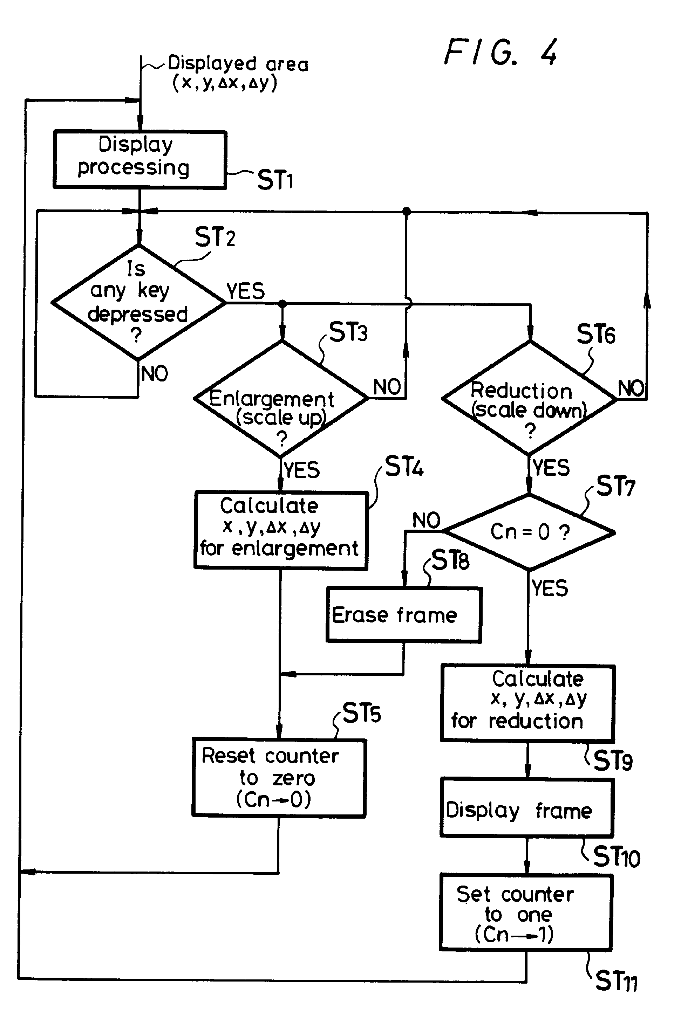

Displayed first on the display 15 is an index for selecting a map 18a of a predetermined area. The index contains names of various areas sorted, for example, in alphabetical order. When the name of a predetermined country or area is specified through the operating keyboard 16, if the coordinate showing the position of the system is x and y in the x-y coordinate system, the computer indicates an indication area to be displayed by data indicative of a range such as Δx and Δy with the position of the system x, y as a reference as shown in figure 5. Then, at step ST₁ in figure 4, desired map data is read out from the map data store 2, and a map 18a is displayed on the display 15 through the image store 5 and the display controller 14, for example, as shown in figure 3A. A position marker 19 indicative of the position of the system itself is also superimposed on the map 18a, if necessary.

Let it next be assumed that the up-key (enlarging key) 16a or the down-key (reducing key) 16b in the operating keyboard 16 is depressed for displaying a more detailed map or a wider area map. First, the calculating circuit 6 including the computer and arranged in the signal processing unit 3 determines whether any key in the operating keyboard 16 is depressed or not as shown in the second step ST₂ in figure 4. If no key is depressed, the operation of the second step ST₂ is repeated. If any key is pressed, the calculating circuit 6 determines which of the enlarging key 16a and the reducing key 16b is depressed at the third step ST₃ or the sixth step ST₆. If neither the enlarging key 16a nor the reducing key 16b is depressed, the operating procedure returns to the second step ST₂. If the enlarging key 16a is depressed, the calculating circuit 6 calculates Δx and Δy relative to the position x, y of the system, for enlarging the scale of the map, as shown in the fourth step ST₄. At the next or fifth step ST₅, a counter in the calculating circuit 6 is operated to reset its count value Cn to zero so as to on/off control the frame display, and the procedure returns to the first step ST₁. A map in a desired enlarged scale is selected through the verifying section 4 from the map data store 2 on the basis of the map enlarging ratio data calculated at the fourth step ST₄ and supplied to the display 15 via the image store 5 and the display controller 14, whereby the enlarged map is displayed on the display 15.

If at the sixth step ST₆ it is detected that the reducing key 16b is depressed, it is determined at the seventh step ST₇ whether the count value Cn of the counter in the calculating circuit 6 is zero or not. If Cn=0 is not true at the seventh step ST₇, a frame erasing operation, referred to later, is effected at the eighth step ST₈ and thereafter the procedure goes to the fifth step ST₅. The operation of the seventh step ST₇, that is, determining whether the count value Cn of the counter is zero or not, is effected in such a manner that a depression signal outputted in response to the depression of the reducing key 16b of the operation keyboard 16 is detected by the display controller 14 and is then supplied through the key operation processing circuit 7 to the calculating circuit 6. Also, a calculation for reducing the scale of the displayed map is effected, as shown in the ninth step ST₉, in response to the depression of the reducing key 16b. To be more specific, the values Δx and Δy are calculated on the basis of the position x, y of the system for determining the required reduction in scale of the map. The key operation processing circuit 7 generates, in response to the depression of the reducing key 16b, a control signal which closes the normally opened switch 9 arranged in the frame display controller 8. The calculating circuit 6 provides the frame drawing element 10 with data indicative of the displayed location and area of a frame, based on the calculation result for the reduction. Thus, the frame drawing data with which a frame is drawn by the frame drawing element 10 is stored in the image store 5.

Meanwhile, the file number of a predetermined reduced map stored in the map data store 2 is specified by the verifying section 4 on the basis of the calculation result for the reduction. Then, the desired reduced map data is read out from the map data store 2 and transferred to and stored in the image store 5. Finally, a reduced map with the frame is displayed through the display controller 14 on the display 15 (steps ST₁₀ - ST₁). In this event, the count value Cn of the counter is set to "1" as shown in the eleventh step ST₁₁, which enables the determination at the seventh step ST₇ made to whether the count value Cn is zero or not. It is therefore possible to control the frame display on the basis of the scale of the displayed map. Specifically, on the reduced map displayed in response to the depression of the reducing key 16b, there is superimposed a frame which indicates the displayed area before the reduction operation. If the reducing key 16b is again depressed, the frame is erased by the operation of the eighth step ST₈ since the count value Cn has been set to "1" .

The above described embodiment employs a rectangular frame for indicating the map area (location and scope) displayed before the reduction. The shape of the frame is not limited to being rectangular, and may be of any suitable shape, eg, a circle. Alternatively, the frame area may be indicated only by the four corner portions or the like and painted in a colour. Further, the previously displayed area may be painted in a different colour from its surround by four L-shaped marks after the reduced map is displayed so as to allow the operator to visually recognise the previously displayed map more easily.

Since the present embodiment is constructed as described above, it is possible to immediately and visually recognise where the area (location and scope) of a map displayed prior to a reduction operation is located on a reduced map (the displayed area of the map in enlarged).

## Claims

1. A map display system for a navigator system comprising:
map data storing means (2) for storing data representative of a substantially continuous map;
read out means for reading out data representative of a part of said substantially continuous map;
display means (15) for displaying said part of said map;
operating means (16) for bringing about a reduction in scale of a map displayed on said display means by means of a map reduction instruction;
reduced map data forming means (6) connected to said display means for forming a reduced map data to display a reduced map on said display means in response to said map reduction instruction from said operating means; and
area data forming means (10) connected to said display means (15) for forming map area data corresponding to the map area which was displayed on said display means (15) before the operation of said operating means (16), wherein when said reduction instruction is delivered from said operating means (16), output data from said area data forming means is supplied to said display means to thereby visually indicate, on the reduced map, the location of the part of the map, which had been displayed by said display means before the map was reduced characterised in that:
said area data forming means is further adapted to erase said indication if said operation means (16) is operated when no further reduction of said map is possible.

2. A map display system as claimed in claim 1, wherein said map area data formed by said area data forming means (10) comprises data for displaying a frame which corresponds to the map area displayed on said display means (15) before the map reduction was executed.

3. A map display system as claimed in claim 2, wherein said map area data formed by said area data forming means comprises data for changing the colour of the map area displayed on said display means before the map reduction is executed, whereby the map area is displayed in a different colour on the reduced map.

4. A map display system as claimed in claim 1, 2 or 3 wherein said reduced map data forming means (6) is arranged to read out map data from map data stored in said map data storing means (2) in response to a signal from said operating means (16) to thereby form reduced map data for displaying the corresponding reduced map on said display means (15).

5. A map display system as claimed in claim 1, 2, 3 or 4 wherein said reduced map data forming means calculates map data stored in said map data storing means in response to a signal from said operating means to thereby form reduced map data for displaying a corresponding reduced map on said display means.

## Patentansprüche

1. Kartenanzeigesystem für ein Navigationssystem, bestehend aus:
einer Kartendaten-Speichereinrichtung (2) zum Speichern von eine im wesentlichen kontinuierliche Karte darstellenden Daten,
einer Ausleseeinrichtung zum Auslesen von einen Teil der im wesentlichen kontinuierlichen Karte darstellenden Daten, einer Anzeigeeinrichtung (15) zum Anzeigen dieses Teils der Karte,
einer Betätigungsrichtung (6) zum Zustandebringen einer Maßstabsverkleinerung einer auf der Anzeigeeinrichtung angezeigten Karte mittels eines Kartenverkleinerungsbefehls,
einer mit der Anzeigeeinrichtung verbundenen Kartenverkleinerungsdaten-Formationseinrichtung (6) zur Formation von Verkleinerungskartendaten zum Anzeigen einer verkleinerten Karte auf der Anzeigeeinrichtung in Abhängigkeit von dem Kartenverkleinerungsbefehl aus der Betätigungsrichtung, und
einer mit der Anzeigeeinrichtung (115) verbundenen Bereichsdaten-Formationseinrichtung (10) zur Formation von mit dem vor der Betätigung der Betätigungseinrichtung (16) auf der Anzeigeeinrichtung (15) angezeigten Kartenbereich korrespondierenden Kartenbereichsdaten, wobei bei der Ausgabe des Verkleinerungsbefehls aus der Betätigungseinrichtung (16) der Anzeigeeinrichtung Ausgangsdaten aus der Bereichsdaten-Formationseinrichtung zugeführt werden, um auf der verkleinerten Karte visuell die Stelle des vor der Verkleinerung der Karte durch die Anzeigeeinrichtung angezeigten Teils der Karte anzuzeigen,
**dadurch gekennzeichnet**
die Bereichsdaten-Formationseinrichtung in dem Fall, daß keine weitere Verkleinerung der Karte möglich ist, die Anzeige bei einer Betätigung der Betätigungseinrichtung (16) löscht.

2. Kartenanzeigesystem nach Anspruch 1, wobei die von der Bereichsdaten-Formationseinrichtung (10) gebildeten Kartenbereichsdaten zur Anzeige eines mit dem vor der Ausführung der Kartenverkleinerung auf der Anzeigeeinrichtung (15) angezeigten Kartenbereich korrespondierenden Rahmens dienende Daten aufweisen.

3. Kartenanzeigesystem nach Anspruch 2, wobei die von der Bereichsdaten-Formationseinrichtung gebildeten Kartenbereichsdaten zur Änderung der Farbe des vor der Ausführung der Kartenverkleinerung auf der Anzeigeeinrichtung angezeigten Kartenbereichs dienende Daten aufweist, um den Kartenbereich in einer anderen Farbe auf der verkleinerten Karte anzuzeigen.

4. Kartenanzeigesystem nach Anspruch 1, 2 oder 3, wobei die Verkleinerungskartendaten-Formationseinrichtung (6) Kartendaten von in der Kartendaten-Speichereinrichtung (2) gespeicherten Kartendaten in Abhängigkeit von einem Signal aus der Betätigungseinrichtung (16) ausliest, um Verkleinerungskartendaten zur Anzeige der korrespondierenden verkleinerten Karte auf der Anzeigeeinrichtung (15) zu bilden.

5. Kartenanzeigesystem nach Anspruch 1, 2, 3 oder 4, wobei die Verkleinerungskartendaten-Formationseinrichtung in der Kartendaten-Speichereinrichtung gespeicherte Kartendaten in Abhängigkeit von einem Signal aus der Betätigungseinrichtung berechnet, um Verkleinerungskartendaten zur Anzeige einer korrespondierenden verkleinerten Karte auf der Anzeigeeinrichtung zu bilden.

## Revendications

1. Système d'affichage de cartes pour un système de navigation, comprenant:
- des moyens de mémorisation de données de cartes (2) pour mémoriser des données représentatives d'une carte sensiblement continue;
- des moyens de lecture pour lire des données représentatives d'une partie de ladite carte sensiblement continue;
- des moyens d'affichage (15) pour afficher ladite partie de ladite carte;
- des moyens de commande (16) pour provoquer une réduction d'échelle d'une carte affichée sur lesdits moyens d'affichage, au moyen d'une instruction de réduction de carte;
- des moyens de formation de données de carte réduite (6) connectés auxdits moyens d'affichage pour former des données de carte réduite pour afficher une carte réduite sur lesdtis moyens d'affichage en réponse à ladite instruction de réduction de carte issue desdits moyens de commande; et
- des moyens de formation de zone (10) connectés auxdits moyens d'affichage (15) pour former des données de zone de carte correspondant à la zone de carte qui était affichée sur lesdits moyens d'affichage 15 avant l'actionnement desdits moyens de commande (16), dans lequel ladite instruction de réduction est délivrée à partir desdits moyens de commande (16), les données de sortie issues desdits moyens de formation de données de zone sont fournies auxdits moyens d'affichage pour indiquer visuellement par ce moyen, sur la carte réduite, l'emplacement de la partie de la carte qui a été affichée par lesdits moyens d'affichage avant que la carte soit réduite, caractérisé en ce que:
- lesdits moyens de formation de données de zone sont en outre adaptés pour effacer ladite indication si lesdits moyens de commande (16) sont actionnés lorsqu'une nouvelle réduction de ladite carte n'est pas possible.

2. Système d'affichage de cartes selon la revendication 1, dans lequel lesdites données de zone de carte formées par lesdits moyens de formation de données de zone (10) comprennent des données pour afficher un cadre qui correspond à la zone de carte affichée sur lesdits moyens d'affichage (15) avant que la réduction de la carte ait été effectuée.

3. Système d'affichage de cartes selon la revendication 2, dans lequel lesdites données de zone de carte formées par lesdits moyens de formation de données de zone comprennent des données pour changer la couleur de la zone de carte affichée sur lesdits moyens d'affichage avant que l'opération de réduction ait été exécutée, ce par quoi la zone de carte est affichée dans une couleur différente sur la carte réduite.

4. Système d'affichage de cartes selon la revendication 1, 2 ou 3, dans lequel lesdits moyens de formation de données de carte réduite (6) sont agencés pour lire des données de carte parmi des données de cartes mémorisées dans lesdits moyens de mémorisation de données de cartes (2) en réponse à un signal issu des dits moyens de commande (16) pour former ainsi des données de carte réduite pour afficher la carte réduite correspondante sur lesdits moyens d'affichage (15).

5. Système d'affichage de cartes selon l'une des revendications 1 à 4, dans lequel lesdits moyens de formation de données de carte réduite calculent des données de carte mémorisées dans lesdits moyens de mémorisation de données de cartes en réponse à un signal issu desdits moyens de commande pour former ainsi des données de carte réduite pour afficher une carte réduite correspondante sur lesdits moyens d'affichage.
